**Europäisches Patentamt**

**European Patent Office**

**Office européen des brevets**

(11) Veröffentlichungsnummer: **0 205 627**
A1

# (12) EUROPÄISCHE PATENTANMELDUNG

(21) Anmeldenummer: **85107177.9**

(22) Anmeldetag: **11.06.85**

(51) Int. Cl.⁴: **F 16 K 1/44**

(43) Veröffentlichungstag der Anmeldung: **30.12.86**
Patentblatt 86/52

(71) Anmelder: **OTTO TUCHENHAGEN GmbH & Co. KG,**
**Berliner Strasse 10 Postfach 1140, D-2059 Büchen (DE)**

(84) Benannte Vertragsstaaten: **AT BE CH DE FR GB IT LI LU**
**NL SE**

(72) Erfinder: **Mieth, Hans-Otto, Dipl.-Ing., Sandkrug 3,**
**D-2058 Schnakenbek/Elbe (DE)**

(54) **Verfahren zur Verwirklichung eines leckagefrei schaltenden und sitzreinigungsfähigen Doppelsitzventils und Vorrichtung zur Durchführung des Verfahrens.**

(57) Die Erfindung bezieht sich auf ein Verfahren zur Verwirklichung eines leckagefrei schaltenden und sitzreinigungsfähigen Doppelsitzventils und eine Vorrichtung zur Durchführung des Verfahrens.

Durch ein derartiges Verfahren wird sichergestellt, daß bei Doppelsitzventilen, die einerseits ein als Sitzteller und andererseits ein schieberartig ausgebildetes Schließglied aufweisen, leckagefreies Schalten und die Möglichkeit der gleichzeitigen Reinigung der Sitzflächen beider Schließglieder und/oder ggf. die alleinige Reinigung der Sitzfläche des produktbeaufschlagten, schieberartig ausgebildeten Schließgliedes verwirklicht werden.

Diese Vorteile werden unter anderem dadurch erreicht, daß vor der Öffnungsbewegung des als Sitzteller ausgebildeten Schließgliedes (5 bzw. 4) das schieberartig ausgebildete Schließglied (4 bzw. 5) aus einer Ruhelage heraus an das in seiner Schließlage befindliche Schließglied (5 bzw. 4) herangeführt und mit diesem gekoppelt wird, daß nach der Schließbewegung des als Sitzteller ausgebildeten Schließgliedes (5 bzw. 4) das schieberartig ausgebildete Schließglied (4 bzw. 5) von ersterem getrennt und in seine Ruhelage überführt wird, und daß zum Zwecke der Sitzreinigung das schieberartig ausgebildete Schließglied (4 bzw. 5) aus seiner Ruhelage in Richtung des ggf. produktführenden Ventilgehäuseteils (1 oder 2) allein verschiebbar ist.

0205627

OTTO TUCHENHAGEN
GmbH & Co. KG
Berliner Straße 10
2059 Büchen

den 4.Juni 1985
Schlo/mi
- 60V69-

An das
Europäische Patentamt
Erhardt-Straße 27
8000 München 2

PATENTANMELDUNG

Anmelder: OTTO TUCHENHAGEN GmbH & Co. KG

Berliner Straße 10

2059 Büchen

------------------------------------------------------------

Verfahren zur Verwirklichung eines leckagefrei schaltenden
und sitzreinigungsfähigen Doppelsitzventils
und Vorrichtung zur Durchführung des Verfahrens

------------------------------------------------------------

Die Erfindung betrifft ein Verfahren zur Verwirklichung eines
leckagefrei schaltenden und sitzreinigungsfähigen Doppelsitzventils, insbesondere bei dessen Einsatz in der Nahrungsmittelindustrie, wobei zwei voneinander unabhängige, relativ zueinander bewegbare Schließglieder vorgesehen sind, die mittels
Betätigungseinrichtungen aus der Schließ- in eine Offenstellung
bewegbar sind, und von denen ein ggf. produktbeaufschlagtes
Schließglied schieberartig ausgebildet, innerhalb einer zwei
Ventilgehäuseteile miteinander verbindenden Zylinderbohrung
gleitend und radial dichtend verschiebbar ist und zur Reinigung
seines Sitzes um einen Teilhub in Richtung des ggf. produktführenden Ventilgehäuseteils verschoben wird, wobei gleichzeitig das andere, als Sitzteller ausgebildete Schließglied gegenüber dem ggf. produktbeaufschlagten um einen gleich- oder gegensinnigen Teilhub verschoben wird, mit einem sowohl in der Schließ- als auch in der Offenstellung des Doppelsitzventils zwischen den Schließgliedern eingeschlossenen Leckage-Hohlraum, der mit der Atmosphäre verbunden ist, wobei das Reinigungsmittel über das andere Ventilgehäuseteil und/oder von außerhalb des Doppelsitzventils über den Leckage-Hohlraum an die beiden durch die Teilhübe der Schließglieder freigelegten Sitzflächen herangeführt wird.

Die vorstehend dargestellten gattungsprägenden Merkmale der vorliegenden Erfindung sind aus dem europäischen Patent 00 44 517 bekannt. Das dort unter Schutz gestellte Verfahren löst die Aufgabe, die gleichzeitige Reinigung beider Sitzflächen eines wenigstens einseitig produktbeaufschlagten Doppelsitzventils zu ermöglichen, welches mit zwei voneinander unabhängigen, relativ zueinander bewegbaren Schließgliedern ausgestattet ist, die mittels Betätigungseinrichtungen aus der Schließ- in eine Offenstellung bewegbar sind, und von denen wenigstens ein produktbeaufschlagtes Schließglied schieberartig ausgebildet und innerhalb einer zwei Ventilgehäuseteile miteinander verbindenden Zylinderbohrung gleitend und radial dichtend verschiebbar ist, und wobei die Schließglieder sowohl in der Schließ- als auch in der Offenstellung einen Leckage-Hohlraum zwischen sich einschließen, der über eine Bohrung innerhalb der aus dem Ventilgehäuse nach unten herausgeführten Ventilstange des unteren Schließgliedes mit der Atmosphäre verbunden ist.

In bestimmten Anwendungsfällen, insbesondere beim Einsatz von Doppelsitzventilen in der Nahrungsmittelindustrie, ist es von Vorteil, wenn der Schaltvorgang derartiger Ventile leckagefrei durchführbar ist. Unter Schaltleckage wird diejenige Fluidmenge verstanden, die gegebenenfalls bei einem Schaltvorgang aus einem Ventilgehäuseteil über die jeweils freigelegte Sitzfläche in den Leckage-Hohlraum gelangt. Falls ein Doppelsitzventil aufgrund seines prinzipiellen Aufbaus nicht leckagefrei schalten kann, tritt diese Schaltleckage sowohl bei der Öffnungs- als auch bei der Schließbewegung des Ventils auf.

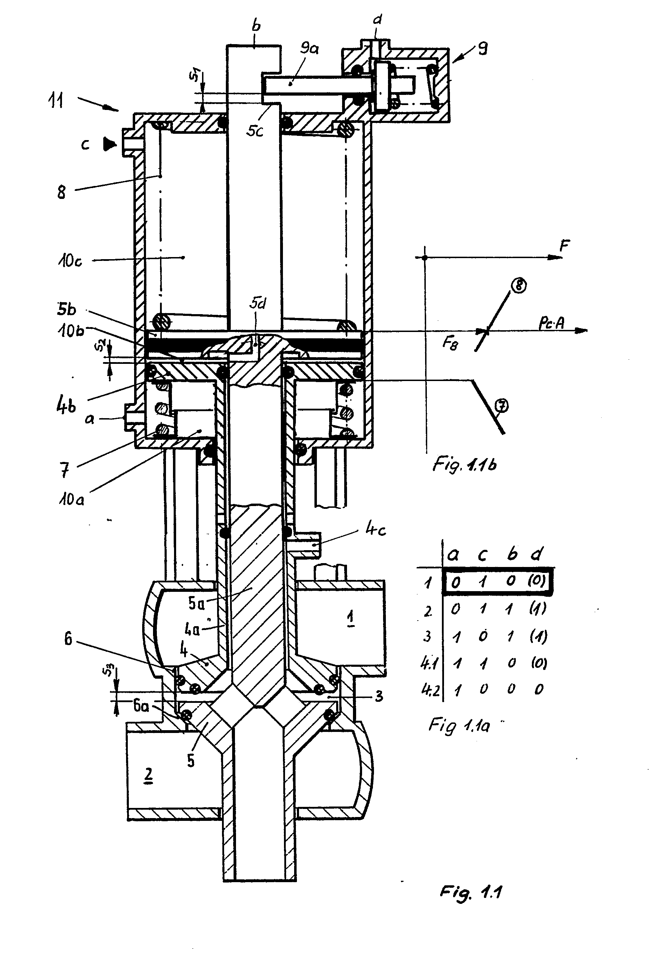

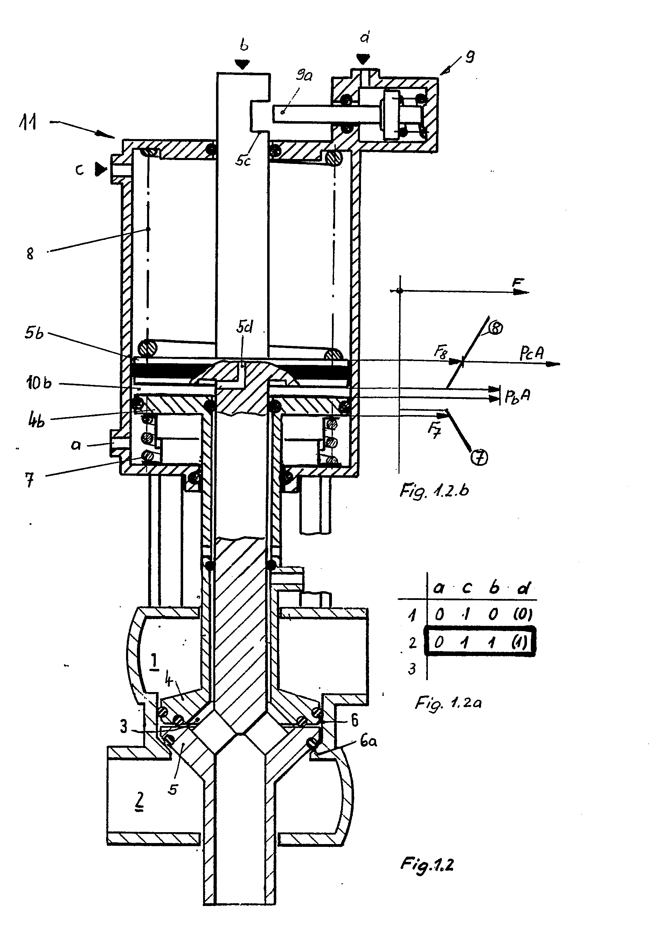

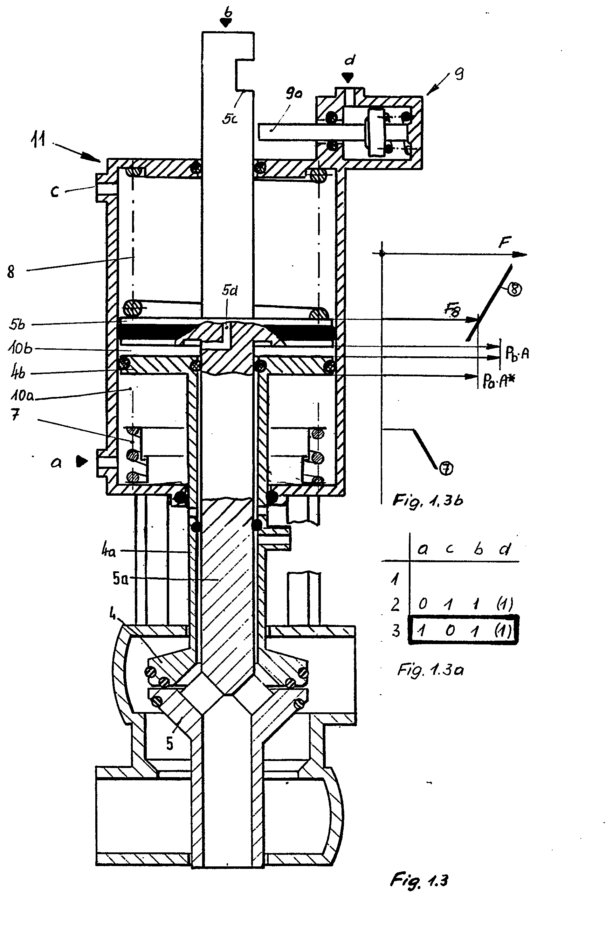

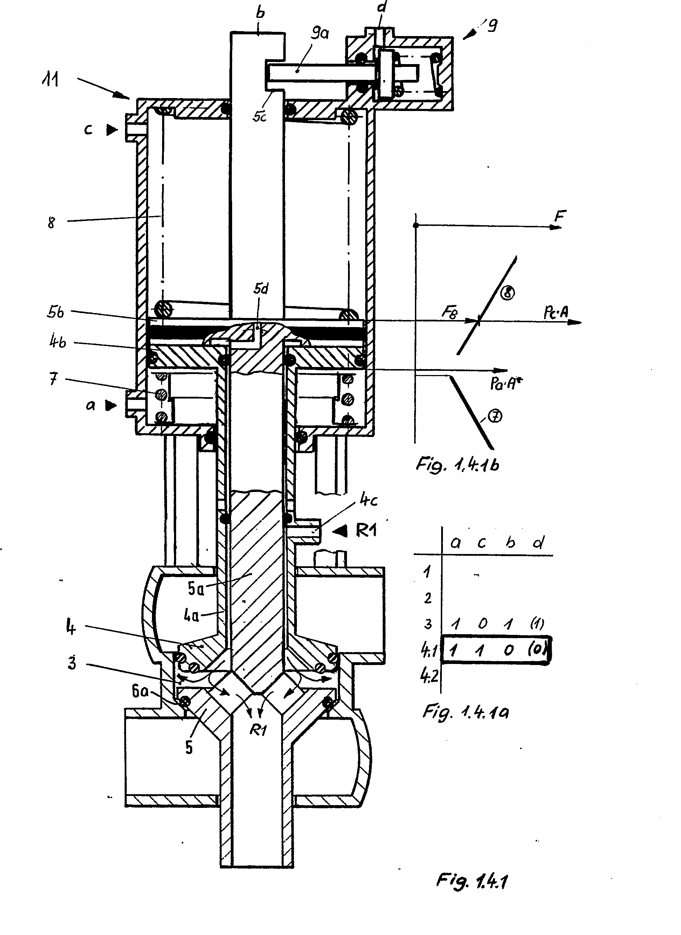

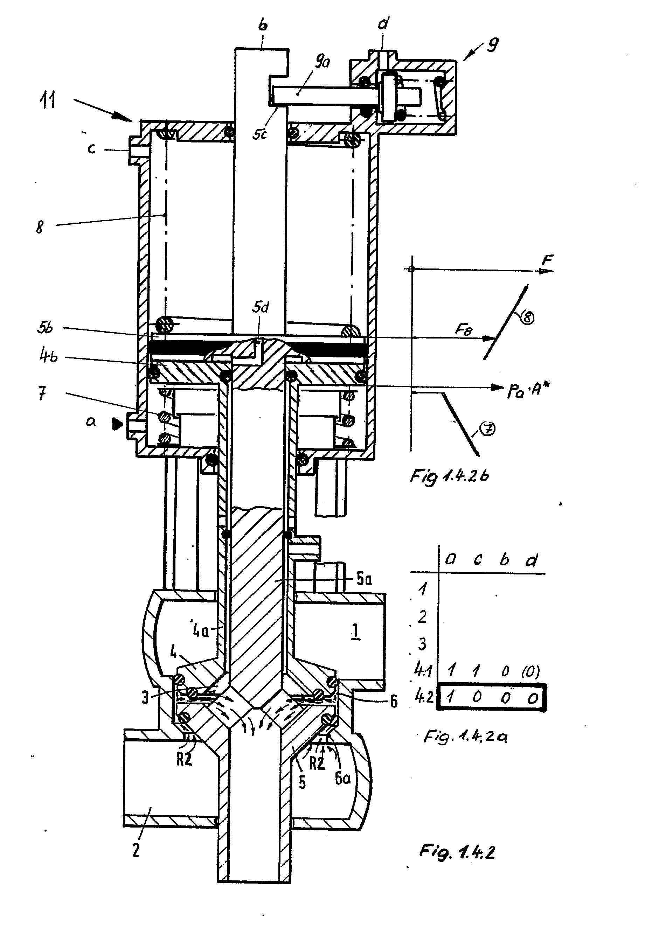

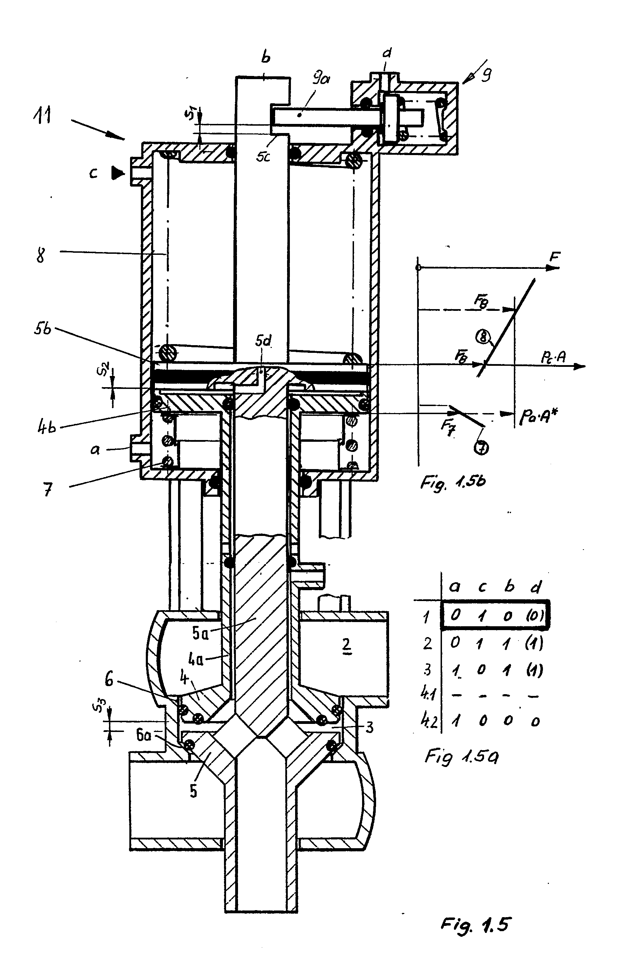

Von den aus dem europäischen Patent 00 44 517 gemäß den Figuren 1 bis 5a bekannten Grundsatzlösungen für Doppelsitzventile stellen lediglich die Lösungen gemäß den Figuren 1 bis 3a leckagefrei schaltende Ventile dar. Darüber hinaus ist es mit keiner der fünf Grundsatzlösungen möglich, die alleinige Reinigung der Sitzfläche des produktbeaufschlagten, schieberartig ausgebildeten Schließgliedes vom Leckage-Hohlraum aus über Reinigungsmittel, das von außerhalb des Doppelsitzventils zugeführt wird, durchzuführen. Ein derartiges Reinigungsverfahren ist in der Praxis aber immer dann notwendig und angezeigt, wenn im anderen Ventilgehäuseteil, das von dem als Sitzteller ausgebildeten Schließglied verschlossen wird, entweder ebenfalls Produkt ansteht oder aber kein Reinigungsmittel zur Verfügung gestellt werden kann.

Ausgehend vom vorgenannten Stand der Technik ist es Aufgabe der vorliegenden Erfindung, bei einem Doppelsitzventil der einleitend gekennzeichneten Gattung leckagefreies Schalten und die Möglichkeit der gleichzeitigen Reinigung der Sitzflächen beider Schließglieder und/oder der alleinigen Reinigungsfähigkeit der Sitzfläche des produktbeaufschlagten, schieberartig ausgebildeten Schließgliedes zu verwirklichen.

Diese Aufgabe wird gemäß Anspruch 1 dadurch gelöst, daß im Zuge des Schaltvorgangs des Doppelsitzventils vor der Öffnungsbewe-

- 4 -

gung des als Sitzteller ausgebildeten Schließgliedes das schieberartig ausgebildete Schließglied aus einer Ruhelage heraus an das in seiner Schließlage befindliche Schließglied herangeführt und mit diesem derart gekoppelt wird, daß der Leckage-Hohlraum zu der ihn umschließenden Zylinderbohrung dicht abgeschlossen ist, daß über den gesamten Zeitraum der Offenstellung des als Sitzteller ausgebildeten Schließgliedes die Kopplung der Schließglieder aufrecht erhalben bleibt, daß nach der Schließbewegung des als Sitzteller ausgebildeten Schließgliedes das schieberartig ausgebildete Schließglied von dem in seiner Schließlage befindlichen Schließglied getrennt und in seine Ruhelage überführt wird, und daß zum Zwecke der Sitzreinigung das schieberartig ausgebildete Schließglied aus seiner Ruhelage in Richtung des ggf. produktführenden Ventilgehäuseteils allein verschiebbar ist.

Durch das erfindungsgemäße Verfahren wird erstmals sichergestellt, daß sämtliche Doppelsitzventile der einleitend gekennzeichneten Gattung prinzipiell leckagefrei schalten. Darüber hinaus wird selbst bei den vor Anwendung des erfindungsgemäßen Verfahrens leckagefrei schaltenden Grundsatzlösungen eine besonders sichere und wirkungsvolle Kopplung der beiden Schließglieder realisiert, da diese Kopplung nicht mehr allein aus der Öffnungs- bzw. Schließbewegung des Doppelsitzventils resultiert, sondern gezielt gesteuert und kräftemäßig beliebig intensiv herbeigeführt wird. Bei den bekannten prinzipiell leckagefrei schaltenden Grundsatzlösungen resultiert bekanntlich die Kopplungskraft der beiden Schließglieder aus der Federkraft, mit der letztere relativ zueinander verspannt sind. Die Federkraft ist in der entkoppelten Stellung der Schließglieder am größten; sie vermindert sich um einen dem Relativhub entsprechenden Betrag und bleibt sodann während der gesamten Offenstellung des Doppelsitzventils praktisch unverändert.

- 5 -

Eine vorteilhafte Ausgestaltung des erfindungsgemäßen Verfahrens ermöglicht durch Heranführen des Reinigungsmittels von außerhalb des Doppelsitzventils über den Leckage-Hohlraum die alleinige Reinigung der Sitzfläche des ggf. produktbeaufschlagten, schieberartig ausgebildeten Schließgliedes, da dieses erfindungsgemäß aus seiner Ruhelage in Richtung des ggf. produktführenden Ventilgehäuseteils allein verschiebbar ist.

Eine andere Weiterbildung des erfindungsgemäßen Verfahrens sieht vor, daß das von außerhalb des Doppelsitzventils bereitgestellte Reinigungsmittel bei Überschreiten eines wahlweise einstellbaren Druckes die zur Sitzreinigung des schieberartig ausgebildeten Schließgliedes notwendige Schaltfolge, die nach einem ventilinternen Schaltalgorithmus abläuft, ursächlich in Gang setzt. Dadurch wird erreicht, daß der zur Sitzreinigung notwendige externe Ansteuerungsaufwand für das Doppelsitzventil auf die im Bedarfsfall notwendige Bereitstellung des Reinigungsmittels mit dem jeweils erforderlichen Druck reduziert wird.

Eine andere vorteilhafte Ausgestaltung des erfindungsgemäßen Verfahrens reduziert den zum Öffnen und Schließen des Doppelsitzventils notwendigen externen Ansteuerungsaufwand dadurch, daß die erfindungsgemäße Schaltfolge nach einem ventilinternen Schaltalgorithmus, der von außerhalb des Doppelsitzventils in bekannter Weise eingeleitet wird, abläuft.

Gemäß einer weiteren Ausgestaltung des erfindungsgemäßen Verfahrens kann der Sitzreinigungsvorgang insbesondere im ggf. produktbeaufschlagten Sitzbereich durch mehrmals sich wiederholende Teilhubbewegungen intensiviert werden.

- 6 -

Um insbesondere das als Sitzteller ausgebildete Schließglied bei unplanmäßig auftretenden Druckerhöhungen oder Druckschlägen gegen Aufdrücken aus seiner Schließlage zu sichern, sieht eine weitere Ausgestaltung des erfindungsgemäßen Verfahrens vor, den vorgenannten Sitzteller wahlweise mit einer Zusatzkraft auf seine Sitzfläche zu drücken.

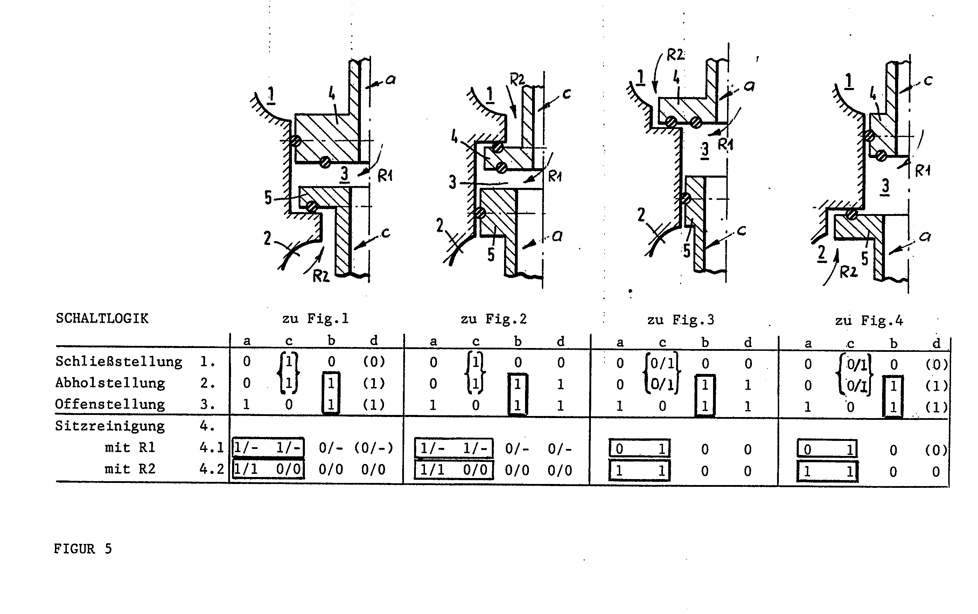

Das im europäischen Patent 00 44 517 unter Schutz gestellte Verfahren löst die dort erfindungsgemäß herausgestellte Aufgabe, nämlich die gleichzeitige Reinigung beider Sitzflächen eines wenigstens einseitig produktbeaufschlagten Doppelsitzventils zu ermöglichen, anhand von fünf in den Figuren 1 bis 5a dargestellten Grundsatzlösungen. Gegenständlich ist die in dem vorgenannten Patent erfindungsgemäß herausgestellte Aufgabe nur für die Grundsatzlösung gemäß Figur 4 gelöst.

Die vorliegende Erfindung verfolgt nicht nur das Ziel, eine Vorrichtung zur Duchführung des erfindungsgemäßen Verfahrens auszubilden, sondern darüber hinaus, quasi als Abfallprodukt der erfinderischen Überlegungen zum vorliegenden Anmeldungsgegenstand, auch jene in der EP 00 44 517 unter Schutz gestellten Grundsatzlösungen, für die die gegenständliche Realisierung der gleichzeitigen Reinigung der Sitzflächen beider Schließglieder bislang noch nicht gelöst ist, im Sinne der letztgenannten Aufgabe gegenständlich auszugestalten.

Die der vorliegenden Erfindung zugrunde liegende Aufgabe, die somit auch die aus der EP 00 44 517 ableitbare Aufgabe umfaßt, nämlich die dort erfindungsgemäß vorgeschlagenen Verfahren auch gegenständlich   - soweit dieses noch nicht geschehen ist - auszubilden, wird gemäß Anspruch 7 dadurch gelöst, daß die

Ventilstangen beider Schließglieder in eine Richtung weisen, teleskopartig ineinanderfassen, in eine Betätigungseinrichtung hineingeführt und in letzterer mit jeweils einem Antriebskolben ausgestattet sind, wobei die wenigstens einseitig federbeaufschlagten Antriebskolben innerhalb und mit der Betätigungseinrichtung drei voneinander getrennte, wahlweise und unabhängig voneinander ansteuerbare Räume bilden, und daß eine Ventilstange mittels einer steuerbaren Blockiereinrichtung gegen ortsfeste Bauteile des Doppelsitzventils arretierbar ist.

Durch die vorgeschlagene Vorrichtung zur Durchführung des erfindungsgemäßen Verfahrens ist es erstmals möglich, sämtliche beim Betrieb von Doppelsitzventilen der einleitend gekennzeichneten Gattung relevanten Funktionen in einer gegenständlichen Lösung "aus einem Guß" zu realisieren, nämlich

- das leckagefreie Schalten,
- die gleichzeitige Reinigung der Sitzflächen beider Schließglieder,
- die alleinige Reinigung der Sitzfläche des ggf. produktbeaufschlagten, schieberartig ausgebildeten Schließgliedes über die Zufuhr von Reinigungsmittel aus dem Leckage-Hohlraum und
- die zusätzliche Anpressung des als Sitzteller ausgebildeten Schließgliedes auf seine Sitzfläche mittels einer Zusatzkraft.

Nach einer vorteilhaften Ausgestaltung der Vorrichtung gemäß der Erfindung ist der Raum zwischen den Antriebskolben über eine Zuleitung in der oder innerhalb des Ringspalts um die Ventilstange mit der Umgebung des Doppelsitzventils verbunden.

- 8 -

Dadurch wird auf einfache und von der Ventilhubbewegung unabhängige Weise eine Zuleitung für Druckmittel zum Raum zwischen
dem Antriebskolben, der mit der Schaltbewegung des Doppelsitzventils seine Größe und Lage ändert, geschaffen.

Ausführungsbeispiele der Erfindung sind in der Zeichnung dargestellt und werden im folgenden näher beschrieben.
Es zeigen:

Figur 1.1      einen Mittelschnitt durch eine Ausführungsform
der Vorrichtung zur Durchführung des erfindungsgemäßen Verfahrens in der Schließstellung;

Figur 1.1a      eine Funktionstabelle mit allen Schaltfolgen,
die bei einer Vorrichtung gemäß Figur 1.1 möglich sind, wobei die Schließlage des Doppelsitzventils gemäß Figur 1.1 besonders hervorgehoben
ist;

Figur 1.1b      eine qualitative Darstellung der Kräfteverhältnisse an den Antriebskolben der Vorrichtung
gemäß Figur 1.1;

Figur 1.2      einen Mittelschnitt durch die vorgenannte Ausführungsform der Vorrichtung in deren sogenannter "Abholstellung";

Figur 1.2a      eine die Abholstellung der Vorrichtung gemäß
Figur 1.2 beschreibende Funktionstabelle, wobei
der Schaltzustand "Abholstellung" besonders hervorgehoben ist;

Figur 1.2b      eine qualitative Darstellung der Kräfteverhältnisse an den Antriebskolben der Vorrichtung
gemäß Figur 1.2 in deren Abholstellung;

Figur 1.3      einen Mittelschnitt durch die vorgenannte Ausführungsform der Vorrichtung in deren Offenstellung;

Figur 1.3a      eine die Offenstellung der Vorrichtung gemäß
Figur 1.3 beschreibende Funktionstabelle, wobei
der dargestellte Schaltzustand besonders hervorgehoben ist;

Figur 1.3b      eine qualitative Darstellung der Kräfteverhältnisse an den Antriebskolben der Vorrichtung
gemäß Figur 1.3;

Figur 1.4.1      einen Mittelschnitt durch die vorgenannte Ausführungsform der Vorrichtung in deren Sitzreinigungsstellung, wobei das Reinigungsmittel über
den Leckage-Hohlraum zugeführt wird;

Figur 1.4.1a      eine den Schaltzustand der Vorrichtung gemäß
Figur 1.4.1 beschreibende und durch Hervorhebung
kennzeichnende Funktionstabelle;

Figur 1.4.1b      eine qualitative Darstellung der Kräfteverhältnisse an den Antriebskolben der Vorrichtung
gemäß Figur 1.4.1 im dargestellten Schaltzustand;

Figur 1.4.2      einen Mittelschnitt durch die vorgenannte Ausführungsform der Vorrichtung in deren Sitzrei-
                 nigungsstellung, wobei das Reinigungsmittel über
                 ein Ventilgehäuseteil herangeführt wird;

Figur 1.4.2a     eine den Schaltzustand der Vorrichtung gemäß
                 Figur 1.4.2 beschreibende und besonders hervor-
                 hebende Funktionstabelle;

Figur 1.4.2b     eine qualitative Darstellung der Kräftever-
                 hältnisse an den Antriebskolben der Vorrichtung
                 gemäß Figur 1.4.2 im dargestellten Schaltzu-
                 stand;

Figur 1.5        einen Mittelschnitt durch eine gegenüber der
                 Ausführungsform gemäß Figur 1.1 geringfügig
                 abgewandelte Ausführungsform der Vorrichtung zur
                 Durchführung des erfindungsgemäßen Verfahrens in
                 der Schließstellung;

Figur 1.5a       eine sämtliche Schaltzustände der Vorrichtung
                 gemäß Figur 1.5 beschreibende Funktionstabelle,
                 wobei die Schließstellung besonders hervorge-
                 hoben ist;

Figur 1.5b       eine qualitative Darstellung der Kräfteverhält-
                 nisse an den Antriebskolben der Vorrichtung
                 gemäß Figur 1.5 in der dargestellten Schließ-
                 stellung;

Figur 2.1        die Linksseitig dargestellt Hälfte eines Mittel-
                 schnittes durch eine andere Ausführungsform der
                 Vorrichtung gemäß der Erfindung zur Durchführung
                 des erfindungsgemäßen Verfahrens,

- 11 -

wobei die beiden Schließglieder gegenüber der
Vorrichtung gemäß Figur 1.1 umgekehrt konfiguriert sind und sich in ihrer Schließlage befinden;

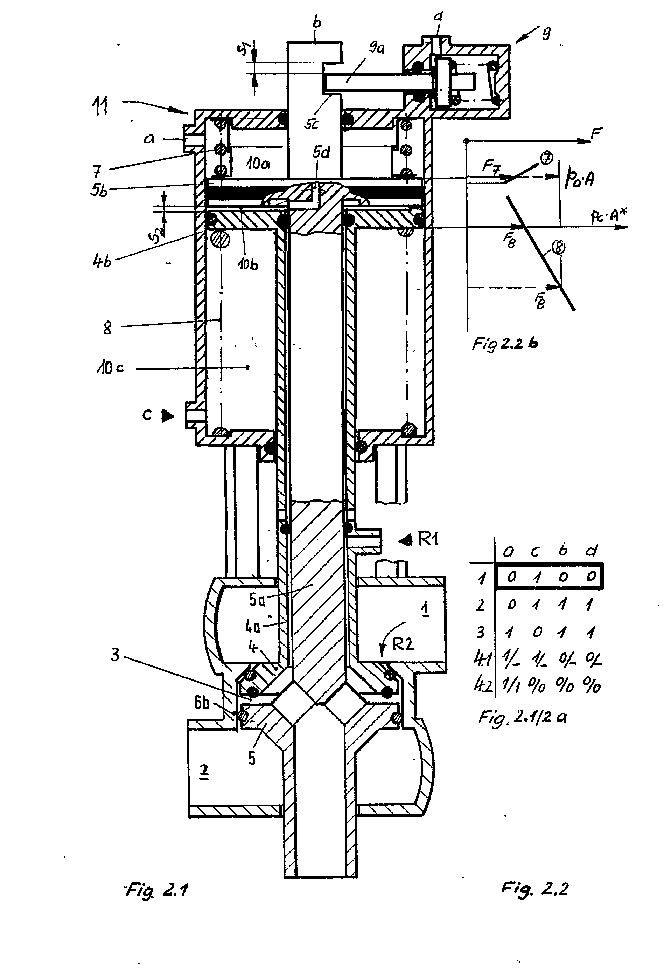

Figur 2.2    die rechte Hälfte eines Mittelschnittes durch
eine gegenüber der Ausführungsform der Vorrichtung gemäß Figur 2.1 geringfügig abgewandelte
Vorrichtung;

Figur 2.1/2a    eine sämtliche Schaltzustände der Vorrichtungen
gemäß Figur 2.1 und 2.2 beschreibende Funktionstabelle, wobei deren Schließlage besonders hervorgehoben ist;

Figur 2.2b    eine qualitative Darstellung der Kräfteverhältnisse an den Antriebskolben der Vorrichtung
gemäß Figur 2.2 in deren Schließ- und darüber
hinaus mit gestrichelter Kennzeichnung in deren
Offenstellung;

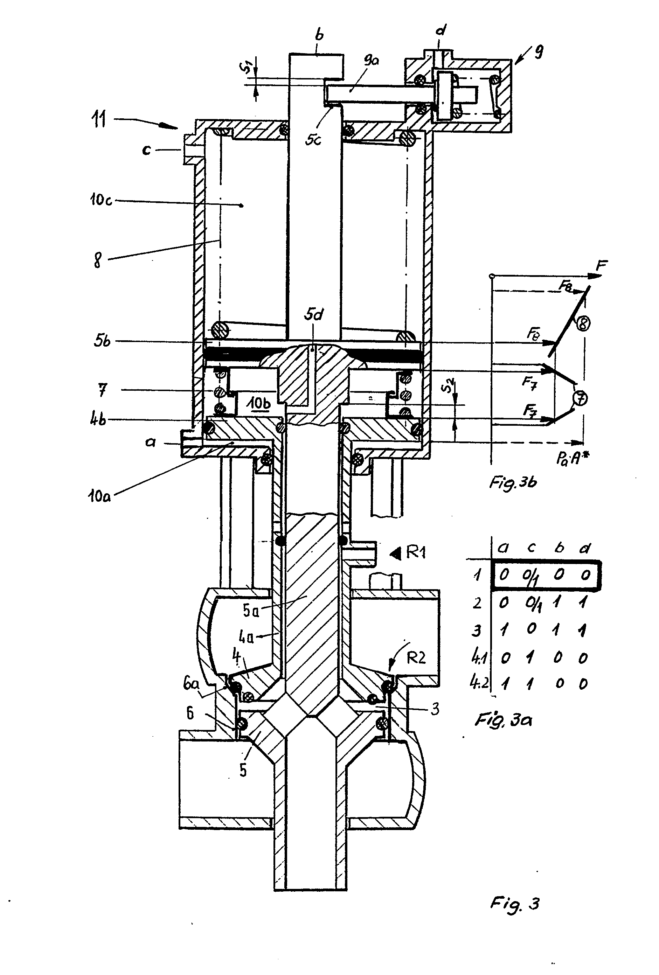

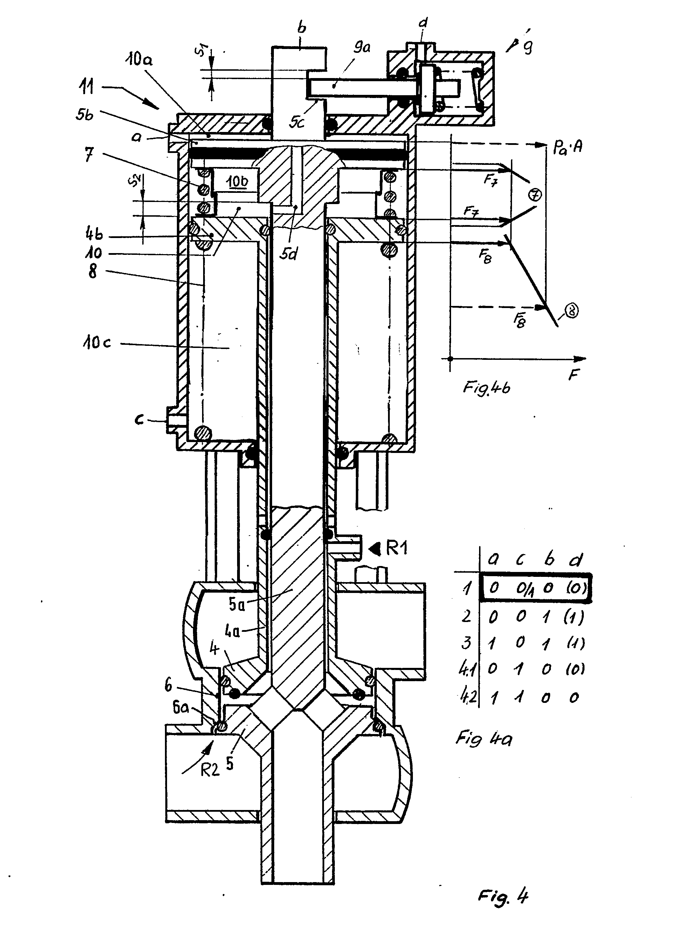

Figur 3    einen Mittelschnitt durch eine weitere Ausführungsform der Vorrichtung gemäß der Erfindung
zur Durchführung des erfindungsgemäßen Verfahrens, wobei die beiden Schließglieder in
einer dritten grundsätzlich möglichen Anordnung
konfiguriert und in ihrer Schließlage dargestellt sind.

Figur 3a    eine sämtliche Schaltzustände der Vorrichtung
gemäß Figur 3 beschreibende Funktionstabelle,
wobei die dargestellte Schließstellung besonders
hervorgehoben ist;

Figur 3b      eine qualitative Darstellung der Kräfteverhältnisse an den Antriebskolben der Vorrichtung gemäß Figur 3 in deren Schließstellung und (in gestrichelter Darstellung) in deren Offenstellung;

Figur 4      einen Mittelschnitt durch eine weitere Ausführungsform der Vorrichtung gemäß der Erfindung zur Durchführung des erfindungsgemäßen Verfahrens, wobei die beiden Schließglieder in einer vierten grundsätzlich möglichen Anordnung konfiguriert und in ihrer Schließstellung dargestellt sind;

Figur 4a      eine sämtliche Schaltzustände der Vorrichtung gemäß Figur 4 beschreibende Funktionstabelle, wobei der dargestellte Schließzustand besonders gekennzeichnet ist;

Figur 4b      eine qualitative Darstellung der Kräfteverhältnisse an den Antriebskolben der Vorrichtung gemäß Figur 4 in der Schließstellung und (in gestrichelter Darstellung) in deren Offenstellung;

Figur 5      eine Übersicht über die vier grundsätzlich möglichen Konfigurationen von zwei Schließgliedern in schematischer Darstellung und dazu jeweils die Zuordnung der zur Durchführung des erfindungsgemäßen Verfahrens notwendigen Schalt-Logik in Form vollständiger Funktionstabellen.

In Figur 1.1 ist eine vorteilhafte Ausführungsform der Vorrichtung zur Durchführung des erfindungsgemäßen Verfahrens dargestellt, bei der das untenliegende Schließglied 5 als Sitzteller ausgebildet ist, während das obenliegende Schließglied 4 schieberartige Form aufweist. Das als Sitzteller ausgebildete Schließglied 5 hat eine im wesentlichen in axialer Richtung auf die zugeordnete Sitzfläche 6a wirkende, nicht näher bezeichnete Dichtung, während das schieberartig ausgebildete Schließglied 4 innerhalb einer zwei Ventilgehäuseteile 1, 2 miteinander verbindenden Zylinderbohrung 6 über eine am äußeren Umfang angeordnete, nicht näher bezeichnete Dichtung gleitend und radial dichtend verschiebbar ist. Ventilstangen 4a bzw. 5a der Schließglieder 4, 5 weisen in eine Richtung, fassen teleskopartig ineinander und sind in eine Betätigungseinrichtung 11 hineingeführt. Dort sind sie mit jeweils einem Antriebskolben 4b bzw. 5b ausgestattet, die jeweils wenigstens einseitig federbeaufschlagt sind und innerhalb und mit der Betätigungseinrichtung 11 drei voneinander getrennte, wahlweise und unabhängig voneinander ansteuerbare Räume 10a, 10b, 10c bilden. Der Raum 10a dient allein und zuerst der Ansteuerung der außenliegenden Ventilstange 4a, der Raum 10c dient allein und zuerst der Ansteuerung der innenliegenden Ventilstange 5a, während über den Raum 10b zwischen den Antriebskolben 4b, 5b gegebenenfalls sowohl der eine als auch der andere Antriebskolben über eine Zuleitung 5d innerhalb der Ventilstange 5a angesteuert wird. Die dargestellte Ausführungsform weist - dieses ist grundsätzlich nicht immer so - innerhalb des Raumes 10c eine Hauptfeder 8 auf, die sich einerseits gegen einen nicht näher bezeichneten Boden der Betätigungseinrichtung und andererseits gegen den mit der innenliegenden Ventilstange 5a verbundenen Antriebskolben 5b abstützt. Innerhalb des Raumes 10a ist eine Nebenfeder bzw. ein federnder Anschlag 7 angeordnet, die bzw. der sich einerseits gegen den anderen Boden der Betätigungseinrichtung 11 und andererseits gegen den mit

der außenliegenden Ventilstange 4a verbundenen Antriebskolben 4b abstützt. Sowohl der Raum 10a als auch der Raum 10c verfügen über einen Druckmittelanschluß, wobei jeder Anschluß, der zu dem die Hauptfeder 8 aufnehmenden Raum führt, die Kennzeichnung c, während der andere Raum die Kennzeichnung a erhält. Die Zuleitung 5d zum Raum 10b erhält die Anschlußkennzeichnung b. In eine oberhalb der Betätigungseinrichtung in der innenliegenden Ventilstange 5a angeordneten Ausnehmung 5c greift ein Riegel 9a einer steuerbaren Blockiereinrichtung 9 formschlüssig ein, wobei deren Druckmittelanschluß mit d gekennzeichnet ist. Ein zwischen den teleskopartig ineinanderfassenden Ventilstangen 4a, 5a gebildeter, nicht näher bezeichneter Ringspalt mündet einerseits in einen sowohl in der Schließ- als auch in der Offenstellung des Doppelsitzventils zwischen den Schließgliedern 4, 5 gebildeten Leckage-Hohlraum 3 ein und ist andererseits mit einem Reinigungsmittelanschluß 4c ausgestattet. Aus seiner Schließlage heraus kann das Schließglied 5 eine durch den Riegel 9a begrenzte axiale Teilhubbewegung s1 ausführen.

Eine gegenüber dem obenliegenden Schließglied 4 aus seiner Schließlage heraus ausführbare relative Teilhubbewegung des untenliegenden Schließgliedes 5 ist mit s3 bezeichnet. Der Abstand der Antriebskolben 4b, 5b ist in der Schließstellung des Doppelsitzventils mit s2 angegeben.

Die Funktionstabelle (Figur 1.1a) verdeutlicht, welche Druckmittelanschlüsse a bis d in der Schließstellung (1) der dargestellten Ausführungsform der Vorrichtung gemäß Figur 1.1 angesteuert sind. Dabei bedeutet a=0, daß der Anschluß a nicht angesteuert ist und somit der zugeordnete Raum 10a nicht mit Druckmittel beaufschlagt wird; c=1 bedeutet, daß der Anschluß c angesteuert ist und somit der zugeordnete Raum 10c mit Druck

mittel beschickt ist; b=0 bedeutet, daß der Anschluß b nicht angesteuert ist und somit der zugeordnete Raum 10 b drucklos ist; d=(0) bedeutet, daß der Anschluß d nicht angesteuert ist und sich somit die federschließende Blockiereinrichtung 9 in ihrer Ruhelage befindet, in der der Riegel 9a die innenliegende Ventilstange 5a formschlüssig arretiert. Ein in Klammern gesetzter Ansteuerungszustand der Blockiereinrichtung 9 soll anzeigen, daß zur Realisierung des vorliegenden Schaltzustandes des Doppelsitzventils das Vorhandensein der Blockiereinrichtung 9 nicht zwingend notwendig ist. Auf die weiteren aus der Funktionstabelle gemäß Figur 1.1a ersichtlichen Schaltzustände der erfindungsgemäßen Vorrichtung wird in den nachfolgenden Figuren 1.2 bis 1.4.2 noch näher eingegangen.

Aus Figur 1.1b ist ersichtlich, daß der Antriebskolben 5b über die Hauptfeder 8 mit einer Federkraft F8 beaufschlagt wird. Zusätzlich zu dieser Kraft wirkt in gleicher Richtung eine Zusatzkraft Pc A, die das als Sitzteller ausgebildete Schließglied 5 auf die Sitzfläche 6a preßt. Das obenliegende Schließglied 4 stützt sich über die außenliegende Ventilstange 4a und den zugeordneten Antriebskolben 4b auf der Nebenfeder 7 ab, wobei Letztere durch nicht näher bezeichnete Vorkehrungen gekammert ist und somit lediglich das Eigengewicht der Anordnung 4, 4a, 4b und gegebenenfalls die aus einem Produktdruck im Ventilgehäuseteil 1 resultierende und auf das obenliegende Schließglied wirkende Kraft aufzunehmen hat. In der Darstellung gemäß Figur 1.1b ist angenommen, daß vom Kolben 4b keinerlei Kraftwirkungen auf die Nebenfeder 7 ausgehen. Falls im Ventilgehäuseteil 2 Produkt unter Druck ansteht, so kann dieses in Verbindung mit der wirksamen Fläche des Schließgliedes 5 Letzteres von seiner Sitzfläche 6a nur dann aufdrücken, wenn die öffnende Kraft größer ist als die algebraische Summe aus

der Vorspannkraft F8 der Hauptfeder 8 und der Zusatzkraft Pc x A, wobei die Größe Pc den Druck des über den Anschluß c herangeführten Druckmittels und die Größe A die wirksame Kolbenfläche des Antriebskolbens 5b bezeichnet. Sollte dennoch das untenliegende Schließglied 5 beispielsweise durch Druckschläge von seiner Sitzfläche 6a angehoben werden, so wird dessen Hubbewegung s1 durch den Riegel 9a der Blockiereinrichtung 9 begrenzt. Da die relative Teilhubbewegung s3 zweckmäßigerweise größer als die Teilhubbewegung s1 gegenüber dem Riegel 9a ausgeführt ist, kann das im Ventilgehäuseteil 2 unter Druck anstehende Medium über den Leckage-Hohlraum 3 und die nach unten aus dem Ventilgehäuseteil 2 herausgeführte hohle Ventilstange des Schließgliedes 5 drucklos abgeführt werden. Ein Druckaufbau im Leckage-Hohlraum 3 ist somit ausgeschlossen. Selbst wenn man einmal hypothetisch einen Druckaufbau annimmt, so kann bei der vorgeschlagenen Ausführungsform der erfindungsgemäßen Vorrichtung das obenliegende, schieberartig ausgebildete Schließglied nicht so weit in Richtung des produktführenden Ventilgehäuseteils 1 verschoben werden, daß es seine Schließstellung innerhalb der Zylinderbohrung 6 verläßt, da es zuvor nach Verschiebung um den Abstand s2+s1 mit seinem Antriebskolben 4b am Antriebskolben 5b, der über die innenliegende Ventilstange 5a am Riegel 9a der Blockiervorrichtung 9 arretiert ist, zur Anlage kommt.

Weitere Schaltzustände der Ausführungsform der erfindungsgemäßen Vorrichtung gemäß Figur 1.1 sind in den nachfolgenden Figuren 1.2 bis 1.4.2 dargestellt. Figur 1.2 zeigt die erfindungsgemäße Vorrichtung in ihrer sogenannten "Abholstellung"(2). Diese Abholstellung ist dadurch gekennzeichnet, daß vor der Öffnungsbewegung des als Sitzteller ausgebildeten Schließgliedes 5 das schieberartig ausgebildete Schließglied 4

aus seiner Ruhelage heraus an das in seiner Schließlage befindliche Schließglied 5 herangeführt und mit diesem derart gekoppelt wird, daß der Leckage-Hohlraum 3 zu der ihn umschließenden Zylinderbohrung 6 dicht abgeschlossen ist. Zur Erzeugung dieses Schaltzustandes der erfindungsgemäßen Vorrichtung muß, ausgehend von der vorangegangenen Schließstellung des Doppelsitzventils, der Anschluß b angesteuert werden.

Die Zusatzkraft, hervorgerufen durch die Ansteuerung des Anschlusses c, ist nach wie vor wirksam. Die Blockiervorrichtung 9, die, wie vorstehend bereits erwähnt, nicht notwendigerweise vorhanden sein muß, ist über ihren Anschluß d angesteuert; ihr Riegel 9a hat die Ausnehmung 5c innerhalb der innenliegenden Ventilstange 5a verlassen. Die Ansteuerungszustände der einzelnen Anschlüsse a bis d sind noch einmal aus der Funktionstabelle in Figur 1.2a ersichtlich:

$$a=0; \quad c=1; \quad b=1; \quad d=(1).$$

Durch das über den Druckmittelanschluß b und die Zuleitung 5d innerhalb des Raumes 10 b anstehende Druckmittel werden die Antriebskolben 4b, 5b auseinandergedrückt. In Figur 1.2b sind die zugeordneten Kräfteverhältnisse qualitativ dargestellt. Man erkennt, daß am Antriebskolben 5b einerseits die Federkraft F8 der Hauptfeder 8 und die Zusatzkraft Pc x A angreifen und andererseits eine aus dem im Raum 10b anstehenden Druckmittel resultierende Kraft Pb x A wirkt. Die letztgenannte Kraft wirkt gleichermaßen auf den Antriebskolben 4b des oben-

- 18 -

Liegenden , schieberartig ausgebildeten Schließgliedes 4 und verschiebt ihn dab ei gegen die vorgespannte und geklammerte Nebenfeder 7 so weit nach unten, daß das Schließglied 4 am Schließglied 5 zur Anlage kommt. An der Kontaktstelle der beiden Schließglieder 4, 5 stützt sich die durch die außenliegende Ventilstange hindurchgeleitete Kraft Pb A noch einmal ab, so daß insgesamt gesehen das untenliegende Schließglied 5, seine Ventilstange 5a und der zugeordnete Antriebskolben 5b unter der Kraft Pb x A keine nach außen wirksame Kraftwirkung erfahren. Die letztgenannten Bauteile werden lediglich unter der Kraft Pb x A intern verspannt. Das untenliegende, als Sitzteller ausgebildete Schließglied 5 wird mit der resultierenden Kraft F8+Pc x A auf seine Sitzfläche 6a gedrückt. Weder aus dem einen noch aus dem anderen Ventilgehäuseteil 1, 2 kann beispielsweise Produkt in den Leckage-Hohlraum 3 gelangen. In der Schließlage des Doppelsitzventils sind die Federkräfte F8 und F7 so bemessen, daß bei Ausfall des Druckmittels und damit bei Wegfall der Zusatzkraft eine eindeutige Schließlage sichergestellt ist.

In Figur 1.3 ist nunmehr die Offenstellung der erfindungsgemäßen Vorrichtung gemäß den Figuren 1.1 und 1.2 dargestellt. Die Funktionstabelle Figur 1.3a beschreibt die zugeordneten Ansteuerungszustände der Anschlüsse a bis d:

$$a=1; \quad c=0; \quad b=1; \quad d=(1).$$

Aus Figur 1.3b erkennt man, daß unter der Kraft Pb x A während der gesamten Offenstellung des als Sitzteller ausgebildeten Schließgliedes 5 die Kopplung der Schließglieder 4, 5 aufrechterhalten bleibt. Unter dem Einfluß des im Raum 10a anstehenden Druckmittels und der daraus auf den Antriebskolben 4b resultierenden Kraft Pa x A* hat sich der Antriebskolben 4b bis in seine mögliche Endlage aufwärts bewegt. Die gekammerte Nebenfeder 7 wird dabei verlassen; sie übt keinerlei Kraftwirkung

auf den Antriebskolben 4b aus. Über die im Raum 10b wirksamen Druckkräfte und die daraus auf die benachbarten Antriebskolben 4b, 5b wirksame Verspannung verhalten sich die Schließglieder 4, 5, die Ventilstangen 4a, 5a und die zugeordneten Antriebskolben 4b, 5b wie ein einziges Bauteil, welches durch die Kraft Pa A* gegen die Kraft F8 der Hauptfeder 8 insgesamt verschiebbar ist. Da die dem Raum 10a zugewandte wirksame Fläche A* grundsätzlich immer kleiner ist als die dem Raum 10b zugewandte Fläche A und gleichzeitig die Drücke des Druckmittels Pa und Pb in der Regel gleich sind, bleibt die Kopplung der Schließglieder 4,5 in jedem Fall unter der öffnenden Kraft Pa x A* wegen Pb x A > Pa x A* erhalten. Für Drücke Pb>Pa läßt sich die Kopplungskraft weiter erhöhen.

Die Schließbewegung der erfindungsgemäßen Vorrichtung vollzieht sich sinngemäß in umgekehrter Reihenfolge. Ein Blick auf die Ansteuerungszustände der Abholstellung (2), dargestellt in der Funktionstabelle gemäß Figur 1.3a, zeigt, daß zunächst die Schließglieder 4, 5 in gekoppelter Stellung bis zur Schließlage des als Sitzteller ausgebildeten Schließgliedes 5 abgesenkt werden. Dies geschieht durch Wegnahme der Ansteuerung am Anschluß a. Vor, während oder nach der Absenkung kann bereits die Zusatzkraft über den Anschluß c auf das Schließglied 5 aufgebracht werden. Erst nach Erreichen der Schließlage des als Sitzteller ausgebildeten Schließgliedes 5 wird das schieberartig ausgebildete Schließglied 4 vom Schließglied 5 getrennt und in seine Ruhelage überführt. Die Trennung erfolgt durch Wegnahme der Ansteuerung am Anschluß b unter der Wirkung der aus Figur 1.2d ersichtlichen Federkraft F7 der Nebenfeder bzw. des federnden Anschlags 7. Die letztlich in der Abholstellung (2) gemäß Figur 1.2b oder Offenstellung (3) gemäß 1.3b der erfindungsgemäßen Vorrichtung wirksame Koppelkraft der Schließglieder 4, 5 ist aus den beiden vorgenannten qualitativen Darstellungen der Kräfteverhältnisse ablesbar:

Koppelkraft in der Abholstellung  $F_k = P_b \times A - F_7$;

Koppelkraft in der Offenstellung  $F_k = P_b \times A - P_a \times A^*$.

In Figur 1.4.1 ist die Sitzreinigung (4.1) der erfindungsgemäßen Vorrichtung dargestellt, wobei das Reinigungsmittel R1 über den Leckage-Hohlraum 3 an die Sitzfläche des schieberartig ausgebildeten Schließgliedes 4 herangeführt wird. Die Ansteuerungszustände hierfür sind aus Zeile (4.1) der Funktionstabelle gemäß Figur 1.4.1a ersichtlich. Das als Sitzteller ausgebildete Schließglied 5 wird unter der Wirkung der Kraft F8 der Hauptfeder 8 und der Zusatzkraft $P_c \times A$ auf seine Sitzfläche 6a gedrückt (vgl. hierzu auch qualitativ dargestellte Kräfteverhältnisse gemäß Figur 1.4.1b). Unter der Wirkung der Kraft $P_a \times A^*$ wurde der Antriebskolben 4b um den aus Figur 1.1 ersichtlichen Teilhub s2 nach oben bis zum Anschlag am Antriebskolben 5b verschoben. Die Nebenfeder 7 übt in dieser Stellung des Antriebskolbens 4b auf letzteren keine Kraftwirkung mehr aus. Durch die Teilhubbewegung s2 des schieberartig ausgebildeten Schließgliedes 4 wurde dessen Sitzfläche freigelegt, so daß Reinigungsmittel R1 über den Reinigungsmittelanschluß 4c, den Ringspalt zwischen den Ventilstangen 4a, 5a und den Leckage-Hohlraum 3 von außerhalb des Doppelsitzventils herangeführt werden kann.

Die Sitzreinigung (4.2) der erfindungsgemäßen Vorrichtung mit der gleichzeitigen Reinigung beider Sitzflächen unter Verwendung des Reinigungsmittel R2 aus dem Ventilgehäuseteil 2 ist in Figur 1.4.2 gezeigt. Der zugeordnete Ansteuerungszustand der Anschlüsse a bis d ist aus Spalte (4.2) der Funktionstabelle gemäß Figur 1.4.2a ersichtlich:

$a=1; \quad c=b=d=0.$

Unter dem Einfluß der Kraft Pa x A* hat sich der Antriebskolben 4b des obenliegenden Schließgliedes 4 bis zum Anschlag am Antriebskolben 5d des untenliegenden Schließgliedes verschoben. Dadurch wurde der aus Figur 1.1 ersichtliche Teilhub s3 um den ebenfalls aus Figur 1.1 ersichtlichen Abstand s2 vergrößert. Mit diesem Abstand wurden nun die beiden Schließglieder 4, 5 gemeinsam um den aus Figur 1.1 ersichtlichen Teilhub s1 gegen den Riegel 9a der Blockiervorrichtung 9 verschoben. Beide Sitzflächen sind dadurch freigelegt und können über das aus dem Ventilgehäuseteil 2 herangeführte Reinigungsmittel R2 gereinigt werden. Das Reinigungsmittel 2 gelangt danach in den Leckage-Hohlraum 3, um von dort über die nach unten herausgeführte hohle Ventilstange abzufließen. Da die öffnende Kraft Pa x A* so ausgelegt ist, daß sie die Kraft der Hauptfeder 8 in der vollen Offenstellung des Doppelsitzventils überwinden kann, ergibt sich in der dargestellten Sitzreinigungsstellung jetzt ein kräftemäßiger Überschuß Pa x A*-F8 (vgl. Fig. 1.4.2b), der vom Riegel 9a der Blockiervorrichtung 9 aufgenommen wird.

In Figur 1.5 ist eine gegenüber der Vorrichtung der Figur 1.1 geringfügig abgewandelte andere Ausführungsform der Vorrichtung zur Durchführung des erfindungsgemäßen Verfahrens dargestellt. Sie unterscheidet sich von der vorstehend erläuterten Ausführungsform dadurch, daß der Abstand zwischen den Antriebskolben 4b, 5b mit s2=0 ausgebildet ist. Im übrigen weist die dargestellte Ausführungsform alle in Figur 1.1 beschriebenen gegenständlichen Merkmale auf. Durch die Reduktion des Abstands s2 auf den Wert 0 wird in der Schließstellung der dargestellten

Ausführungsform, wie sie Figur 1.5 wiedergibt, ein gegen die Nebenfeder 7 vorgespanntes, schieberartig ausgebildetes Schließglied 4 verwirklicht. Diese Situation ist auch aus der qualitativen Darstellung der Kräfteverhältnisse gemäß Figur 1.5b ersichtlich. Gegenüber der Ausführungsform gemäß Figur 1.1 hat die vorliegende den Vorteil, daß das schieberartig ausgebildete Schließglied 4 unter der Einwirkung von gegebenenfalls auftretenden Sogkräften im Ventilgehäuseteil 2 nicht um den möglichen Teilhub s2 angehoben werden kann. Als Preis für diesen Vorteil stellt sich allerdings ein Nachteil ein, der darin besteht, daß eine Sitzreinigung (4.1) (vgl. Spalte (4.1) der Funktionstabelle gemäß Figur 1.5a) des schieberartig ausgebildeten Schließgliedes 4 nicht mehr möglich ist. Die Ansteuerungszustände der Anschlüsse a bis d sind identisch mit jenen der Vorrichtung gemäß Figur 1.1 (vgl. Figur 1.1a, Zeile (1)). Die Federkraft F7 der Nebenfeder 7 wird zweickmäßigerweise in der Schließlage (1) des Doppelsitzventils so bemessen, daß sie kleiner als die Federkraft F8 der Hauptfeder 8 ist, damit für den Fall eines Druckmittelausfalls und des dadurch bedingten Wegfalls der Zusatzkraft Pc x A eine eindeutige Schließlage der erfindungsgemäßen Vorrichtung sichergestellt ist. Die gestrichelt dargestellten Kräfte F8 und Pa x A* zeigen das Kräftespiel in der Offenstellung (3) der erfindungsgemäßen Vorrichtung, wobei aus Gründen der Übersichtlichkeit die die Antriebskolben 4b, 5b auseinanderdrückenden Druckkräfte Pb x A (vgl. Figur 1.3b) nicht dargestellt sind. Eine Sitzreinigung (4.2) ist uneingeschränkt möglich (vgl. Zeile (4.2) der Funktionstabelle gemäß Figur 1.5a), wobei unter der Wirkung

der öffenden Kraft Pa x A* die Schließglieder 4, 5 mit konstantem Abstand s3 um den Teilhub s1 gegen den Riegel 9a der Blockiervorrichtung 9 nach oben verschoben werden. Für das Vorhandensein der Blockiervorrichtung 9 gilt das zur Ausführungsform gemäß Figur 1.1 vorstehend Gesagte in gleicher Weise.

Eine weitere Ausführungsform der Vorrichtung zur Durchführung des erfindungsgemäßen Verfahrens mit einer gegenüber der Ausführungsform gemäß Figur 1.1 grundsätzlich anders konfigurierten Schaltgliedanordnung ist in den Figuren 2.1 und 2.2 dargestellt. Der Unterschied zwischen der Ausführungsform gemäß Figur 2.1 und jener gemäß Figur 2.2 ist identisch mit dem Unterschied zwischen den Ausführungsformen gemäß Figuren 1.1 und 1.5 . Bei der Ausführungsform gemäß Figur 2.2 erhält der Abstand s2 zwischen den Antriebskolben 4b, 5b den Wert 0. Vergleicht man die Schaltgliedkonfiguration mit jener der Ausführungsform gemäß Figur 1.1, so stellt man fest, daß sich der Unterschied der vorliegenden von derjenigen, die an erster Stelle beschrieben wurde, dadurch ergibt, daß eine Spiegelung an der Trennebene zwischen den Schließgliedern 4, 5 vorgenommen wurde. Diese Feststellung läßt sich uneingeschränkt auch auf die Konfiguration der Betätigungseinrichtung 11 übertragen. Während die Konfiguration der Ventilstangen 4a, 5a mit ihren zugeordneten Antriebskolben 4b, 5b unverändert übernommen werden kann, werden die von den Antriebskolben 4b, 5b begrenzten, außenliegenden Räume um den Raum 10b waagerecht gespiegelt. Dadurch ergibt sich zwangsläufig auch eine Vertauschung der Anschlußbezeichnungen a und c. Ein Vergleich der die Ansteuerungszustände der Anschlüsse a bis d in den möglichen Schaltzuständen (1) bis (4.2) beschreibenden Funktionstabelle Figur 2.1/2a mit jener gemäß Figur 1.1a zeigt, daß die Schaltlogik der Ausführungsform gemäß Figur 2.1 bzw. 2.2 mit jener gemäß Figur 1 bzw. 1.5 völlig identisch ist.

Dieser Zusammenhang wird auch aus der zusammenfassenden Darstellung gemäß Figur 5 in beeindruckender Weise ersichtlich. Für die Kräfteverhältnisse an den Antriebskolben 4b, 5b gilt gleiches, wenn man davon ausgeht, daß eine Spiegelung an einer waagerechten Achse vorzunehmen ist (vgl. Figur 2.2b).

- 24 -

In Figur 2.2b sind die Kräfteverhältnisse für die Ausführungsform gemäß Figur 2.2 dargestellt. In der Schließstellung (1) der dargestellten Ausführungsform ist die Kraft F8 der Hauptfeder 8 so zu bemessen, daß in der Abholstellung (2) gilt:

$$F8 + Pc \times A* > Pb \times A,$$

da die im Raum 10b am Antriebskolben 4b wirksame Kolbenfläche A größer ist als die andererseits am gleichen Kolben im Raum 10c wirksame Kolbenfläche A*.

Eine Sitzreinigung (4.1) der Ausführungsform gemäß Figur 2.2 ist nicht möglich; die gleiche Feststellung wurde bereits bei der anderen Ausführungsform gemäß Figur 1.5 getroffen. Für die Sitzreinigung (4.2) gelten die zu den Ausführungsformen gemäß Figur 1.1 und 1.5 getroffenen Aussagen sinngemäß. Der den Teilhub der innenliegenden Ventilstange bestimmende Abstand s1 innerhalb der Ausnehmung 5c befindet sich oberhalb des Riegels 9a der Blockiervorrichtung 9, da die Öffnungsbewegung des dargestellten Doppelsitzventils nach unten erfolgt.

Eine grundsätzlich dritte Schaltgliedkonfiguration ist in einer weiteren Ausführungsform der Vorrichtung zur Durchführung des erfindungsgemäßen Verfahrens in Figur 3 dargestellt. Das oben liegende Schließglied 4 ist als Sitzteller, das untenliegende Schließglied ist schieberartig ausgebildet. Die Öffnungsbewegung des Doppelsitzventils erfolgt nach oben, da die Sitzfläche 6a unterhalb des obenliegenden Schließgliedes 4 angeordnet ist. Die Ausführungsform gemäß Figur 3 unterscheidet sich von jener gemäß Figur 1.1 im übrigen nur dadurch, daß die Nebenfeder bzw. der federnde Anschlag 7 nunmehr im Raum 10b zwischen den Antriebskolben 4b, 5b vorgesehen ist. Die Ansteuerungszustände

der Anschlüsse a bis d in allen Schaltzuständen (1) bis (4.2) sind aus der Funktionstabelle gemäß Figur 3a zu ersehen. Man erkennt bei den Schaltzuständen (2) und (3) unter der Ansteuerung b ein allgemeines Schaltprinzip, das sich bereits bei den vorstehend beschriebenen Ausführungsformen herauskristallisiert hat. Auf diese Gemeinsamkeiten wird in der zusammenfassenden Darstellung der Figur 5 noch im einzelnen besonders hingewiesen. In der dargestellten Schließlage (1) der erfindungsgemäßen Vorrichtung ist die Aufbringung einer Zusatzkraft Pc x A möglich. Sie wirkt mittelbar über den Antriebskolben 5b und die Nebenfeder 7 auf den Antriebskolben 4b des als Sitzteller ausgebildeten oberen Schließgliedes 4. Diese Zusatzkraft ist in der qualitativen Darstellung der Kräfteverhältnisse nach Figur 3b nicht berücksichtigt. Sie ist aus der Funktionstabelle gemäß Figur 3a in Spalte (1) unter der Ansteuerung c ersichtlich. Man erkennt weiterhin, daß bei den in der Zeichnung dargestellten Abmessungsverhältnissen die Zusatzkraft in der Abholstellung (2) (vgl. Zeile (2) der Figur 3a) nur dann aufrecht erhalten bleiben kann, wenn der im Raum 10b am Antriebskolben 4b wirksame Ringquerschnitt größer ist als der im Raum 10c am Antriebskolben 5b wirksame Ringquerschnitt A, da anderenfalls keine am Antriebskolben 5b aufwärts gerichtete resultierende Hubkraft erzeugt werden kann. Die in Figur 3b gestrichelt dargestellten Kräfte Pa x A* und F8 kennzeichnen die auf die Antriebskolben 4b, 5b wirkenden Kräfte in der Offenstellung (3) des Doppelsitzventils.

Auf die einzelnen Schaltzustände und die weitere Wirkungsweise der Ausführungsform gemäß Figur 3 wird im folgenden nicht näher eingegangen, da die vorstehenden Ausführungen in Verbindung mit der Schaltlogik gemäß Figur 3a und den in Figur 3b dargestellten Kräfteverhältnissen die diesbezüglichen Zusammenhänge und die Wirkungsweise für den Fachmann nahelegen.

In Figur 4 ist eine andere Ausführungsform der Vorrichtung gemäß der Erfindung dargestellt. Sie zeigt ein Doppelsitzventil, bei dem die Schließglieder 4, 5 nach der vierten und letzten grundsätzlichen Möglichkeit konfiguriert sind. Das untenliegende Schließglied 5 ist als Sitzteller ausgebildet und wird von unten an die Sitzfläche 6a angedrückt. Das obenliegende Schließglied 4 hat die Form eines Schiebers. Die Schließglieder 4, 5 sind gegenüber der Ausführungsform gemäß Figur 3 um eine zwischen den Schließgliedern verlaufende waagerechte Symmetrieachse gespiegelt. Das gleiche gilt für die Betätigungseinrichtung 11 mit Ausnahme der Antriebskolben 4b, 5b und der zwischen diesen angeordneten Nebenfeder 7, wobei die Spiegelachse wiederum waagerecht durch den Raum 10b verläuft. Auf eine detaillierte Beschreibung der vorliegenden Ausführungsform kann verzichtet werden, da die zur Ausführungsform gemäß Figur 3 getroffenen Aussagen sinngemäß zutreffen. Ein Vergleich der sämtliche Schaltzustände (1) bis 4.2 enthaltenden Funktionstabelle gemäß Figur 4a mit jener gemäß Figur 3a stützt diese Aussage, da beide in allen Positionen völlig identisch sind. Die Aufbringung einer Zusatzkraft Pc x A* läßt sich sowohl in der Schließ- als auch in der Abholstellung (1) bzw. (2) des Doppelsitzventils aufbringen, wenn die Nebenfeder oder der federnde Anschlag 7 entsprechend ausgelegt ist, da die Zusatzkraft vom Antriebskolben 4b über die Nebenfeder 7 auf den Antriebskolben 5b, der dem als Sitzteller ausgebildeten Schließglied 5 zugeordnet ist, übertragen wird. Die Abholstellung (2) ist unter der Zusatzkraft Pc x A* dann durchführbar, wenn die die beiden Antriebskolben 4b, 5b spreizende Druckkraft Pb x A größer ist als die Federkraft F8 und die Zusatzkraft Pc x A*. Auch bei der Betrachtung der qualitativen Darstellung der Kräfteverhältnisse an den Antriebskolben 4b, 5b gemäß Figur 4b stellt man symmetrische Verhältnisse zur entsprechenden Darstellung gemäß Figur 3b fest.

In Figur 5 sind die vier prinzipiell möglichen Schließglied-konfigurationen in Verbindung mit den zugeordneten Funktionstabellen noch einmal zusammenfassend dargestellt. Ein Funktions- und Wirkungsprinzip ist allen vier grundsätzlichen Schließgliedkonfigurationen gemeinsam. Es ist die Kopplung der Schließglieder 4, 5 in der Abhol- und in der Offenstellung (2) bzw. (3) durch Auseinanderfahren der Antriebskolben 4b, 5b, wodurch die erfindungsgemäß herausgestellte Teilaufgabe, das Doppelsitzventil leckagefrei zu schalten, gelöst wird. Man erkennt in allen vier Fällen, daß sowohl in der Abhol- als auch in der Offenstellung (2) bzw. (3) der Raum zwischen den Antriebskolben 4b, 5b angesteuert wird (b=1). Darüber hinaus wird eine weitere erfindungsgemäß herausgestellte Aufgabe, nämlich die gleichzeitige Reinigung der Sitzflächen beider Schließglieder sicherzustellen, gelöst (vgl. Zeile (4.2), Ansteuerungen a und c). Eine Lösung dieser Teilaufgabe war aus dem europäischen Patent 00 44 517 lediglich in gegenständlicher Form für die Schließgliedkonfiguration gemäß Figur 1 bekannt geworden. Daß auch für die dritte erfindungsgemäß heraus-gestellte Teilaufgabe, nämlich die alleinige Reinigung der Sitzfläche des produktbeaufschlagten, schieberartig ausge-bildeten Schließgliedes sicherzustellen, nunmehr gegenständ-liche Lösungen existieren, zeigt Zeile (4.1) in Figur 5. Des weiteren kann in allen vier Fällen das als Sitzteller ausgebil-dete Schließglied 5 bzw. 4 wahlweise mit einer Zusatzkraft auf seine Sitzfläche gedrückt werden (vgl. Zeilen (1) und (2), Ansteuerung c).

Welcher der vorgeschlagenen Ausführungsformen der Vorrichtung zur Durchführung des erfindungsgemäßen Verfahrens in der Praxis der Vorzug gegeben wird, läßt sich nur anhand von konkreten

- 28 -

Anwendungsfällen beurteilen. Da alle vier Schließgliedkonfigurationen Leckagefreies Schalten mit der uneingeschränkten Möglichkeit der Reinigung sowohl beider Sitzflächen gleichzeitig als auch der des produktbeaufschlagten, schieberartig ausgebildeten Schließgliedes alleine, verwirklichen, wird die Auswahl von speziellen Anwendungsgegebenheiten abhängen. Soll beispielsweise ein derartiges Doppelsitzventil einen Tankauslauf schalten, so besteht meistens die Forderung, daß bei vollständiger Entleerung des Tanks auch das angeschlossene Ventilgehäuse vollständig entleert wird. Dies hat zur Folge, daß der Tank am oberen Ventilgehäuseteil anzuschließen ist, während in der Regel als Schließgliedkonfiguration Anordnung gemäß Figur 4 zu wählen wäre. Soll beispielsweise sicher verhindert werden, daß unplanmäßig auftretende Druckerhöhungen oder Druckstöße in Leitungen das Doppelsitzventil aufdrücken, so resultiert aus dieser Forderung eine andere Schließgliedkonfiguration als wenn gerade gefordert wird, daß unplanmäßige Druckstöße durch eines der beiden Schließglieder abzufedern ist. Ist beispielsweise die Ausbaubarkeit der Schließglieder 4, 5 in Verbindung mit ihrer Ventilstange 4a bzw. 5a nach oben eine unabdingbare Forderung, so scheiden in der Regel die Ausführungsformen gemäß Figur 2 oder 4 aus, es sei denn, der gesamte Sitzbereich läßt wie dies gelegentlich praktiziert wird, ebenfalls aus dem Ventilgehäuse demontieren.

Was die Anordnung der Blockiervorrichtung 9 im Zusammenwirken mit der innenliegenden Ventilstange 5a betrifft, so ist diese Anordnung nur beispielhaft gewählt worden. Es ist ebenso denkbar, daß die mit ortsfesten Gehäuseteilen des Doppelsitzventils verbundene Blockiervorrichtung 9 die außenliegende Ventilstange 4a arretiert. Im übrigen handelt es sich bei der dargestellten Blockiervorrichtung um eine mehr die Wirkungsweise als die tatsächliche Raumform beschreibende Schemaskizze. Es stehen hier eine Reihe von ralisierbaren Bauformen zur Verfügung; eine davon ist beispielsweise  - allerdings in Kombination mit einer die Ventilstangen miteinander verriegelnden Vorkehrung -  aus der EP 00 44 517 bekannt.

PATENTANSPRÜCHE

1. Verfahren zur Verwirklichung eines leckagefrei schaltenden und sitzreinigungsfähigen Doppelsitzventils, insbesondere bei dessen Einsatz in der Nahrungsmittelindustrie, wobei zwei voneinander unabhängige, relativ zueinander bewegbare Schließglieder (4, 5) vorgesehen sind, die mittels Betätigungseinrichtungen aus der Schließ- in eine Offenstellung bewegbar sind, und von denen ein ggf. produktbeaufschlagtes Schließglied (4, 5) schieberartig ausgebildet, innerhalb einer zwei Ventilgehäuseteile (1, 2) miteinander verbindenden Zylinderbohrung (6) gleitend und radial dichtend verschiebbar ist und zur Reinigung seines Sitzes um einen Teilhub in Richtung des ggf. produktführenden Ventilgehäuseteils (1 oder 2) verschoben wird, wobei gleichzeitig das andere, als Sitzteller ausgebildete Schließglied (5 bzw.4) gegenüber dem ggf. produktbeaufschlagten um einen gleich- oder gegensinnigen Teilhub verschoben wird, mit einem sowohl in der Schließ-als auch in der Offenstellung des Doppelsitzventils zwischen den Schließgliedern (4, 5) eingeschlossenen Leckage-Hohlraum (3), der mit der Atmosphäre verbunden ist, wobei das Reinigungsmittel über das andere Ventilgehäuseteil (2 bzw. 1) und/oder von außerhalb des Doppelsitzventils über den Leckage-Hohlraum (3) an die beiden durch die Teilhübe der Schließglieder freigelegten Sitzflächen herangeführt wird, gekennzeichnet

durch einen Schaltvorgang des Doppelsitzventils, bei dem vor der Öffnungsbewegung des als Sitzteller ausgebildeten Schließgliedes (5 bzw. 4) das schieberartig ausgebildete Schließglied (4 bzw.5) aus einer Ruhelage heraus an das in seiner

60V69
0205627

Schließlage befindliche Schließglied (5 bzw. 4) herangeführt und mit diesem derart gekoppelt wird, daß der Leckage-Hohlraum (3) zu der ihn umschließenden Zylinderbohrung (6) dicht abgeschlossen ist, daß über den gesamten Zeitraum der Offenstellung des als Sitzteller ausgebildeten Schließgliedes (5 bzw. 4) die Kopplung der Schließglieder (4, 5) aufrecht erhalten bleibt, daß nach der Schließbewegung des als Sitzteller augebildeten Schließgliedes (5 bzw. 4) das schieberartig ausgebildete Schließglied (4 bzw. 5) von dem in seiner Schließlage befindlichen Schließglied (5 bzw. 4) getrennt und in seine Ruhelage überführt wird, und daß zum Zwecke der Sitzreinigung das schieberartig ausgebildete Schließglied (4 bzw. 5) aus seiner Ruhelage in Richtung des ggf. produktführenden Ventilgehäuseteils ( 1 oder 2) allein verschiebbar ist.

2. Verfahren nach Anspruch 1, dadurch gekennzeichnet, daß in der Schließlage des als Sitzteller ausgebildeten Schließgliedes (5 bzw. 4) das schieberartig ausgebildete Schließglied (4 bzw. 5) in Richtung des ggf. produktführenden Ventilgehäuseteils (1 oder 2) verschoben und Reinigungsmittel (R1) von außerhalb des Doppelsitzventils über den Leckage-Hohlraum 3 an die freigelegte Sitzfläche herangeführt wird.

3. Verfahren nach Anspruch 1 oder 2, dadurch gekennzeichnet, daß das von außerhalb des Doppelsitzventils bereitgestellte Reinigungsmittel (R1) bei Überschreiten eines wahlweise einstellbaren Druckes die zur Sitzreinigung des schieberartig ausgebildeten Schließgliedes (4 bzw. 5) notwendige Schaltfolge, die nach einem ventilinternen Schaltalgorythmus abläuft, ursächlich in Gang setzt.

4. Verfahren nach einem der Ansprüche 1 bis 3, dadurch gekennzeichnet, daß

die zum Öffnen und Schließen des Doppelsitzventils notwendige Schaltfolge nach einem ventilinternen Schaltalgorythmus, der von außerhalb des Doppelsitzventils in bekannter Weise eingeleitet wird, abläuft.

5. Verfahren nach einem der Ansprüch 1 bis 4, dadurch gekennzeichnet, daß

der Reinigungsvorgang durch mehrmals sich wiederholende Teilhubbewegungen der Schließglieder (4 bzw. 5) durchgeführt wird.

6. Verfahren nach einem der Ansprüche 1 bis 5, dadurch gekennzeichnet, daß

das als Sitzteller ausgebildete Schließglied (5 bzw. 4) wahlweise mit einer Zusatzkraft auf seine Sitzfläche (6a) gedrückt wird.

7. Vorrichtung zur Durchführung des Verfahrens nach einem der Ansprüche 1 bis 6, dadurch gekennzeichnet, daß

die Ventilstangen (4a, 5a) beider Schließglieder (4, 5) in eine Richtung weisen, teleskopartig ineinanderfassen, in eine Betätigungseinrichtung (11) hineingeführt und in Letzterer mit jeweils einem Antriebskolben (4b bzw. 5b) ausgestattet sind, wobei die wenigstens einseitig federbeaufschlagten Antriebskolben (4b bzw. 5b) innerhalb und mit der Betätigungseinrichtung (11) drei voneinander getrennte, wahlweise und unabhängig voneinander ansteuerbare Räume (10a, 10b, 10c) bilden, und daß eine Ventilstange (4a oder 5a) mittels einer steuerbaren Blockiereinrichtung (9) gegen ortsfeste Bauteile des Doppelsitzventils arretierbar ist.

8.  Vorrichtung nach Anspruch 7,
    dadurch gekennzeichnet, daß

    der Raum (10b) zwischen den Antriebskolben (4b, 5b)
    über eine Zuleitung (5d) in der oder innerhalb des
    Ringspaltes um die Ventilstange 5a mit der Umgebung
    des Doppelsitzventils verbunden ist.

Fig. 1.1b

| | a | c | b | d |
|---|---|---|---|---|
| 1 | 0 | 1 | 0 | (0) |
| 2 | 0 | 1 | 1 | (1) |
| 3 | 1 | 0 | 1 | (1) |
| 4.1 | 1 | 1 | 0 | (0) |
| 4.2 | 1 | 0 | 0 | 0 |

Fig 1.1a

Fig. 1.1

0205627

Fig. 1.2.b

| | a | c | b | d |
|---|---|---|---|---|
| 1 | 0 | 1 | 0 | (0) |
| 2 | 0 | 1 | 1 | (1) |
| 3 | | | | |

Fig. 1.2a

Fig. 1.2

Fig. 1.3b

| | a | c | b | d |
|---|---|---|---|---|
| 1 | | | | |
| 2 | 0 | 1 | 1 | (1) |
| 3 | 1 | 0 | 1 | (1) |

Fig. 1.3a

Fig. 1.3

Fig. 1.4.1b

| | a | c | b | d |
|---|---|---|---|---|
| 1 | | - | | |
| 2 | | | | |
| 3 | 1 | 0 | 1 | (1) |
| 4.1 | 1 | 1 | 0 | (0) |
| 4.2 | | | | |

Fig. 1.4.1a

Fig. 1.4.1

0205627

Fig. 1.4.2

Fig 1.4.2b

| | a | c | b | d |
|---|---|---|---|---|
| 1 | | | | |
| 2 | | | | |
| 3 | | | | |
| 4.1 | 1 | 1 | 0 | (0) |
| 4.2 | 1 | 0 | 0 | 0 |

Fig. 1.4.2a

Fig. 1.5b

| | a | c | b | d |
|---|---|---|---|---|
| 1 | 0 | 1 | 0 | (0) |
| 2 | 0 | 1 | 1 | (1) |
| 3 | 1 | 0 | 1 | (1) |
| 4.1 | — | — | — | — |
| 4.2 | 1 | 0 | 0 | 0 |

Fig 1.5a

Fig. 1.5

0205627

7/10

Fig. 2.1

Fig. 2.2

Fig 2.2 b

Fig. 2.1/2 a

| | a | c | b | d |
|---|---|---|---|---|
| 1 | 0 | 1 | 0 | 0 |
| 2 | 0 | 1 | 1 | 1 |
| 3 | 1 | 0 | 1 | 1 |
| 4.1 | 1/_ | 1/_ | 0/_ | 0/_ |
| 4.2 | 1/1 | 0/0 | 0/0 | 0/0 |

8/10    0205627

Fig.3b

Fig.3a

| | a | c | b | d |
|---|---|---|---|---|
| 1 | 0 | 0/1 | 0 | 0 |
| 2 | 0 | 0/1 | 1 | 1 |
| 3 | 1 | 0 | 1 | 1 |
| 4.1 | 0 | 1 | 0 | 0 |
| 4.2 | 1 | 1 | 0 | 0 |

Fig. 3

Fig.4b

Fig 4a

Fig. 4

| | a | c | b | d |
|---|---|---|---|---|
| 1 | 0 | 0/1 | 0 | (0) |
| 2 | 0 | 0 | 1 | (1) |
| 3 | 1 | 0 | 1 | (1) |
| 4.1 | 0 | 1 | 0 | (0) |
| 4.2 | 1 | 1 | 0 | 0 |

FIGUR 5

| SCHALTLOGIK | | zu Fig.1 | | | | zu Fig.2 | | | | zu Fig.3 | | | | zu Fig.4 | | | |
|---|---|---|---|---|---|---|---|---|---|---|---|---|---|---|---|---|---|
| | | a | c | b | d | a | c | b | d | a | c | b | d | a | c | b | d |
| Schließstellung | 1. | 0 | {1} | 0 | (0) | 0 | {1} | 0 | 0 | 0 | {0/1} | 0 | 0 | 0 | {0/1} | 0 | (0) |
| Abholstellung | 2. | 0 | {1} | 1 | (1) | 0 | {1} | 1 | 1 | 0 | {0/1} | 1 | 1 | 0 | {0/1} | 1 | (1) |
| Offenstellung | 3. | 1 | 0 | 1 | (1) | 1 | 0 | 1 | 1 | 1 | 0 | 1 | 1 | 1 | 0 | 1 | (1) |
| Sitzreinigung | 4. | | | | | | | | | | | | | | | | |
| mit R1 | 4.1 | 1/- | 1/- | 0/- | (0/-) | 1/- | 1/- | 0/- | 0/- | 0 | 1 | 0 | 0 | 0 | 1 | 0 | (0) |
| mit R2 | 4.2 | 1/1 | 0/0 | 0/0 | 0/0 | 1/1 | 0/0 | 0/0 | 0/0 | 1 | 1 | 0 | 0 | 1 | 1 | 0 | 0 |

10/10

0205627

Europäisches
Patentamt

**EUROPÄISCHER RECHERCHENBERICHT**

0205627

Nummer der Anmeldung

EP 85 10 7177

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| D,A | EP-A-0 044 517  (TUCHENHAGEN)<br>* Insgesamt * | 1-4,7 | F 16 K    1/44 |
| A | FR-A-2 379 005  (TUCHENHAGEN)<br>*  Figur  3; Seite 10, Zeile 29 - Seite 11 * | 1-4,7 | |
| A | DE-A-2 623 039  (SÜDMO)<br>* Insgesamt * | 1-4,7 | |
| A | DE-A-3 005 329  (SÜDMO)<br>* Insgesamt * | 1-4,7 | |
| A | DE-B-2 632 587  (TUCHENHAGEN)<br>* Insgesamt * | 1-4,7 | |
| A | EP-A-0 060 910  (HOLSTEIN)<br>* Insgesamt * | 1-4,7 | RECHERCHIERTE SACHGEBIETE (Int. Cl.4)<br><br>F 16 K |
| A | EP-A-0 122 323  (HOLSTEIN)<br>* Insgesamt * | 1-4,7 | |

Der vorliegende Recherchenbericht wurde für alle Patentansprüche erstellt

| Recherchenort<br>DEN HAAG | Abschlußdatum der Recherche<br>13-01-1986 | Prüfer<br>LEMERCIER D.L.L. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82